# EUROPEAN PATENT APPLICATION

(11) **EP 2 871 599 A1**
(43) Date of publication of application: **13.05.2015**
(21) Application number: 14191037.2
(22) Date of filing: 30.10.2014
(51) Int. Cl.: G06Q 10/06, G06Q 40/00

(54) **Report data management server and report data management program**

(30) Priority: 06.11.2013 JP 2013230512
(71) Applicant: IPS Co., Ltd., Osaka 530-0011 (JP)
(72) Inventor: AKITA, Toshifumi, Osaka-shi, Osaka 530-0011 (JP)
(74) Representative: Grünecker Patent- und Rechtsanwälte PartG mbB

(57) **Abstract**

A report data management server includes a report data storing unit storing position information and report data in association with each other. The report data management server receives a request for supply of information containing position information, extracts information corresponding to position information contained in the request for supply from the report data storing unit, and supplies extracted information to a user terminal.

## Description

### BACKGROUND

### Technical Field

The present invention relates to a report data management server which is a server for operation of ERP, and provides various types of data via a communication network in accordance with a request issued from a user terminal used by a user. The present invention further relates to a report data management program incorporated in this report data management server.

### Related Art

Package software called ERP (Enterprise Resource Planning) has been the mainstream software used for building core business systems in enterprises. An increasing number of these core business systems containing ERP (enterprise resource planning systems, or ERP systems) are built on relational databases. The principal objectives of application programs designed for the systems are often focused on business processing, while primary attention is scarcely given to output reports in the use of the systems.

Under these circumstances, various data warehouse systems offering complementary functions for the core business systems have been proposed for the purpose of processing a large volume of business data at high speed, analyzing business data in various aspects, and outputting reports (for example, see JP 2002-312208 A).

### SUMMARY

These systems aimed at managing information such as reports manage many types of reports, and further manages report data containing a considerable volume of data. Accordingly, it is highly demanded to develop such a technology which allows a user to more easily handle various types of data (or various types of information) without imposing the necessity of complicated operation or determination on a user.

It is an object of the present invention to provide a technology which allows a user to more easily handle various types of information in a business system (ERP system) providing information on reports.

A report data management server according to the present invention is a server for operation of ERP, and provides report data produced for each business in a business process to a user via a communication network in accordance with a request issued from a user terminal used by the user. The report data management server includes: a report data storing unit storing position information and report data in association with each other; a supply request receiving unit receiving a request for supply of information containing position information from the user terminal; an extracting unit extracting information corresponding to position information contained in the request for supply from the report data storing unit in accordance with reception of the request for supply by the supply request receiving unit; and a supplying unit supplying information extracted by the extracting unit to the user terminal.

This structure allows a user to more easily handle various types of information in a business system providing information concerning reports.

The report data storing unit may be configured to store information concerning organizations in association with the position information and the report data. The extracting unit may be configured to extract an organization corresponding to the position information. The supplying unit may be configured to supply information containing the organization to the user terminal.

The supply request receiving unit may be configured to receive a request for supply created in accordance with input operation for inputting report data on the user terminal side.

The report data management server may be configured to include a saving request receiving unit receiving a request for saving of report data, and a storing unit storing in the report data storing unit report data corresponding to the request for saving and the position information in association with each other in accordance with reception of the request for saving by the saving request receiving unit.

The supply request receiving unit may be configured to receive a request for supply created on the user terminal side in accordance with a request for use of report data.

The request for use may be configured to contain a request concerning search or reference of report data.

The extracting unit may be configured to extract report data corresponding to the position information. The supplying unit may be configured to supply information containing the report data to the user terminal.

The extracting unit may be configured to extract report data corresponding to the position information when a request for supply received by the supply request receiving unit is a request for supply created in accordance with the request for use. The supplying unit may be configured to supply information containing the report data to the user terminal.

A report data management program according to the present invention allows operation of ERP, and allows a report data management server to execute a process for supplying report data produced for each business in a business process to a user via a communication network in accordance with a request issued from a user terminal used by the user. Under the report data management program the report data management server including a report data storing unit storing position information and report data in association with each other executes a supply request receiving process receiving a request for supply of information containing position information from the user terminal, an extracting process extracting information corresponding to position information contained in the request for supply from the report data storing unit in accordance with reception of the request for supply in the supply request receiving process, and a supplying process supplying information extracted in the extracting process to the user terminal.

According to the present invention, a user is allowed to more easily handle various types of information in a business system providing information on reports.

### BRIEF DESCRIPTION OF DRAWINGS

FIG. 1 is a block diagram illustrating a constitution example of a report data management system;
FIG. 2 is a figure illustrating an example of a storing condition of an organization determining master;
FIG. 3 is a figure illustrating an example of a storing condition of voucher data;
FIG. 4 is a flowchart showing an example of a voucher data storing process;
FIG. 5 is a flowchart showing an example of a voucher data supplying process;
FIG. 6 is a figure illustrating an example of a screen receiving a request for use; and
FIG. 7 is a figure illustrating an example of a voucher list screen.

### DETAILED DESCRIPTION

An embodiment according to the present invention is hereinafter described with reference to the drawings.

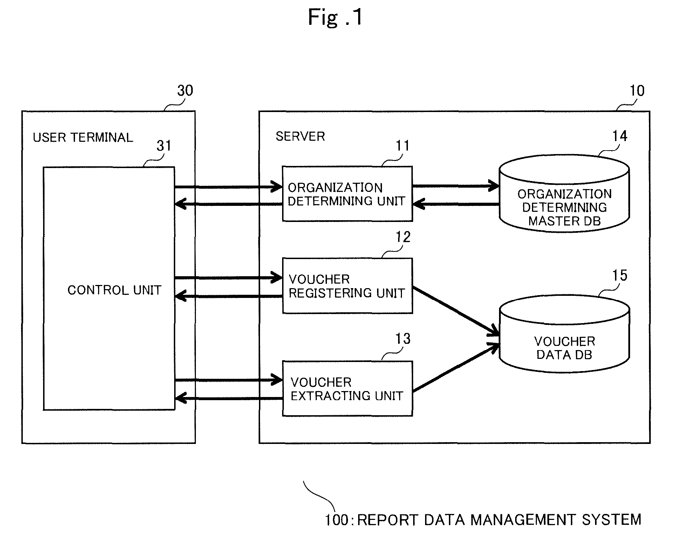

FIG. 1 is a block diagram illustrating a constitution example of a report data management system 100 according to the embodiment of the present invention. As illustrated in FIG. 1, the report data management system 100 includes a server 10 and a user terminal 30.

The server 10 and the user terminal 30 are connected to each other via a communication network such as the Internet, or a relay. Practically, the report data management system 100 includes a plurality of user terminals not shown in the figure. These user terminals may be configured to be either communicable with each other via the server 10, or incommunicable with each other.

The server 10 is connected to a not-shown enterprise resource planning system via a communication network such as a LAN (Local Area Network) and a dedicated communication line.

The enterprise resource planning system includes a core business server, a data warehouse server (DWH server), and a voucher data DB (Database). The enterprise resource planning system performs enterprise resource planning functions by communicating with (transmitting and receiving various types of information to and from) the server 10 as necessary. Known technologies are applied to the core business server and the like included in the enterprise resource planning system. It is preferable that the core business server and the DWH server are connected to each other via a dedicated communication line.

The core business server is a server managed by a manager of the report data management system 100, for example, and performs various types of functions for managing report data concerning various types of business affairs (such as creation, update, and saving of data). The core business server is constituted by an ordinary information processing device provided with an OS (Operating System) and a relational DB.

The term "report" in this context is a general term referring to books, vouchers and the like. Books herein are materials where items concerning receipts and disbursements of money and articles are entered, while vouchers herein are data based on which books are created, and are evidences for business transactions or the like. Discussed in this embodiment is an example in which the core business server handles only voucher data as report data.

The core business server executes various types of processes under a business application program. Examples of the business application program herein include a sales task management program, a production management program, a financial accounting management program, and a managerial accounting management program.

The DWH server is a server managed by the system manager of the report data management system 100, for example, and performs various types of functions for realizing a data warehouse. The data warehouse in this context refers to a system which analyzes relevance between respective items in business data such as report data accumulated in the time-series order. The DWH server has a function of converting files in CSV (Comma Separated Values) format transferred from the core business server into data in a predetermined data format, for example, and registering respective types of the converted data in predetermined storing areas. The DWH server may be configured to extract data corresponding to respective storing areas from data in the state of CSV format without converting data format.

The voucher data DB is a storage medium which stores various types of voucher data collected, sorted, or processed in other manners by various types of information processing under various types of business application programs (programs stored in a not-shown business application program DB included in the enterprise resource planning system). For example, voucher data corresponding to order slips in the voucher data DB is associated with order slit header information, order slit detailed information, delivery date schedule and the like, and stored in a structure searchable based on keys such as slip numbers.

The core business server has a function of converting various types of data stored in the voucher data DB into data in CSV format in accordance with predetermined extraction conditions, and transmitting the converted data to the server 10. According to this embodiment, the core business server transfers data files converted into CSV format using FTP (File Transfer Protocol) to the server 10.

Discussed hereinabove is an example of the constitution of the server 10 for offering a function as a server for operation of ERP, or as a server included in a system for operation of ERP. Discussed hereinbelow is an example in which the server 10 contains a voucher data DB and others for the purpose of simplification of the explanation or like purposes. More specifically, discussed in this embodiment is the server 10 having both functions as an application server, and as a database server.

The server 10 is a server for operation of ERP, and provides various types of data via a communication network in accordance with a request from the user terminal 30 used by a user. The server 10 is constituted by an information processing device such as a WWW server, and managed by the system manager of the report data management system 100.

As illustrated in FIG. 1, the server 10 in this embodiment includes an organization determining unit 11, a voucher registering unit 12, a voucher extracting unit 13, an organization determining master DB 14, and a voucher data DB 15. The server 10 further includes a control unit performing various controls, a DB storing various types of data necessary for performing functions as a server possibly used in an ordinary report data management system (for example, data used for various types of programs such as business application program), and other components. However, parts not particularly relating to the present invention are not described in detail herein.

The organization determining unit 11 has a function of determining an organization in accordance with a request issued from the user terminal 30. The organization in this context refers to information about a corresponding element in various groups such as factories and warehouses associated with voucher data. Examples of the function for determining organizations include an extraction function which extracts one or more organizations from a plurality of organizations under a predetermined rule. Examples of the predetermined rule include a rule determined based on position information received from the user terminal 30.

The voucher registering unit 12 has a function of registering various types of information corresponding to a request from the user terminal 30 in predetermined storage areas. According to this embodiment, the voucher registering unit 12 has a function of storing voucher data in the voucher data DB 15, and a function of temporarily saving voucher data in a temporary storage area. In the description of this embodiment, the action for storing information in a storage medium is expressed in a plurality of ways as "registering", "storing", and "saving" depending on respective cases. However, it is not intended that these different expressions make any technical distinctions in expressing this action.

The voucher extracting unit 13 has a function of extracting from the voucher data DB 15 voucher data corresponding to a request from the user terminal 30. According to this embodiment, the voucher extracting unit 13 has a function of supplying extracted voucher data to the user terminal 30. Examples of functions expected to be contained in the function of supplying voucher data to the user terminal 30 include a function of creating information containing extracted voucher data (such as output information displayed on a predetermined screen on the user terminal side), a function of transmitting the created information to the user terminal 30, and other various functions for allowing the user of the user terminal 30 to check the contents of voucher data.

The organization determining master DB 14 has a function of storing information (organization determining master) based on which the organization determining unit 11 determines organizations.

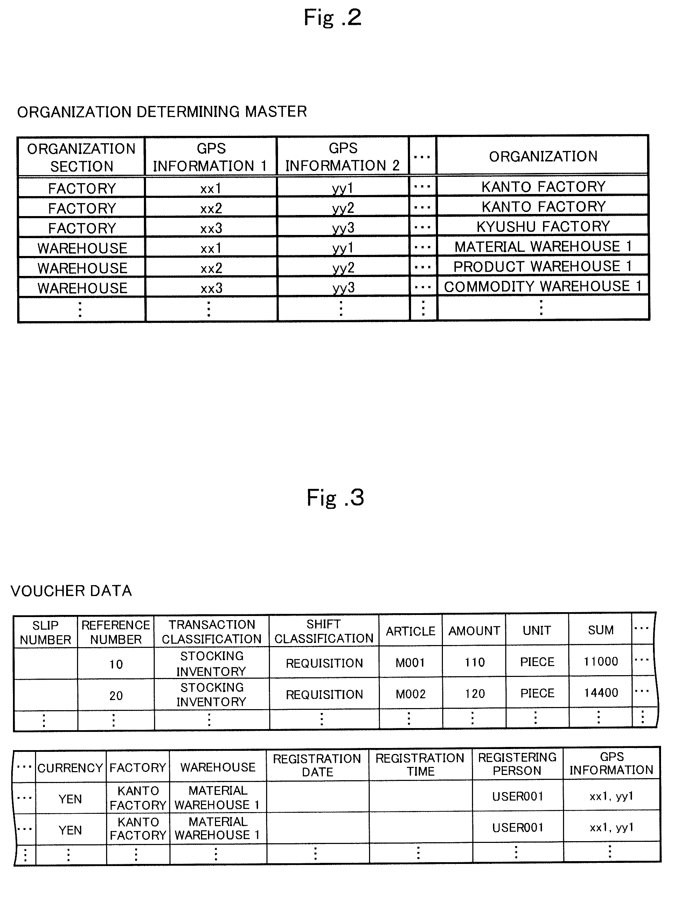

FIG. 2 is a figure illustrating an example of a storing condition of an organization determining master in the organization determining master DB 14. As illustrated in FIG. 2, the organization determining master DB 14 stores organization section, GPS information 1, GPS information 2, and organization in association with each other. The GPS (Global Positioning System) information in this context is an example of position information indicating a location of an organization. According to this embodiment, the GPS information 1 shows the latitude, while the GPS information 2 shows the longitude. The GPS information 1 and the GPS information 2 are collectively referred to as GPS information in the following description. The position information is not limited to the GPS information, but may be any types of information based on which the organization determining unit 11 can designate positions of organizations, such as district names and addresses.

The voucher data DB 15 has a function of storing voucher data. According to this embodiment, the voucher data DB 15 stores position information and voucher data in association with each other.

FIG. 3 is a figure illustrating an example of a storing condition of voucher data in the voucher data DB 15. As illustrated in FIG. 3, the voucher data DB 15 stores slip number, reference number, transaction classification, shift classification, article, amount, unit, sum, currency, factory, warehouse, registration date, registration time, registering person, and GPS information in association with each other.

The factory and the warehouse contained in the voucher data are associated with the corresponding organization stored in the organization determining master DB 14. According to this embodiment, the voucher data may contain GPS information as position information. More specifically, it is assumed in this embodiment that position information may be contained in voucher data in a method for associating voucher data and position information.

The user terminal 30 includes a control unit 31. The user terminal 30 is an information processing device such as iPad (registered trademark) provided with not-shown CPU (Central Processing Unit), ROM, RAM, display unit and others. According to this embodiment, it is assumed that the user terminal 30 contains various types of applications used for handling voucher data, such as a web browser. In addition, according to this embodiment, the user terminal 30 has a function of defining queries (search item, search key, extraction key and the like) used for obtaining necessary information from the server 10 in accordance with operation input from the user, for example, and transmitting the defined queries to the server 10.

The control unit 31 has a function of performing various controls for communicating with the server 10, and outputting data obtained from the server 10 to the display unit by a function of software such as a predetermined web application (web browser), for example.

According to this embodiment, the control unit 31 has both functions of transmitting voucher data and GPS information to the organization determining unit 11 of the server 10, and receiving information (organization information) concerning the corresponding organization as a response to the transmission. In this case, the organization determining unit 11 designates organization information corresponding to received GPS information by referring to the organization determining master DB 14, and transmits the designated organization information to the control unit 31.

The control unit 31 further has a function of allowing the voucher registering unit 12 of the server 10 to register voucher data and GPS information in the voucher data DB 15, and receiving information containing the resultant registration.

The control unit 31 further has a function of transmitting a request for search of voucher data to the voucher extracting unit 13 of the server 10, and receiving voucher data extracted by the voucher extracting unit 13 as a response to the request. In this case, the voucher extracting unit 13 extracts from the voucher data DB 15 voucher data corresponding to the request for search received from the control unit 31. The constitution of the request for search may be any constitution as long as conditions for voucher data search are contained in the request. Examples of the constitution of the request for search include a constitution containing position information, and a constitution containing a search word.

Operation of the report data management system 100 according to this embodiment is hereinafter described with reference to the drawings. Contents of some actions and processes not particularly relating to the present invention may be omitted herein.

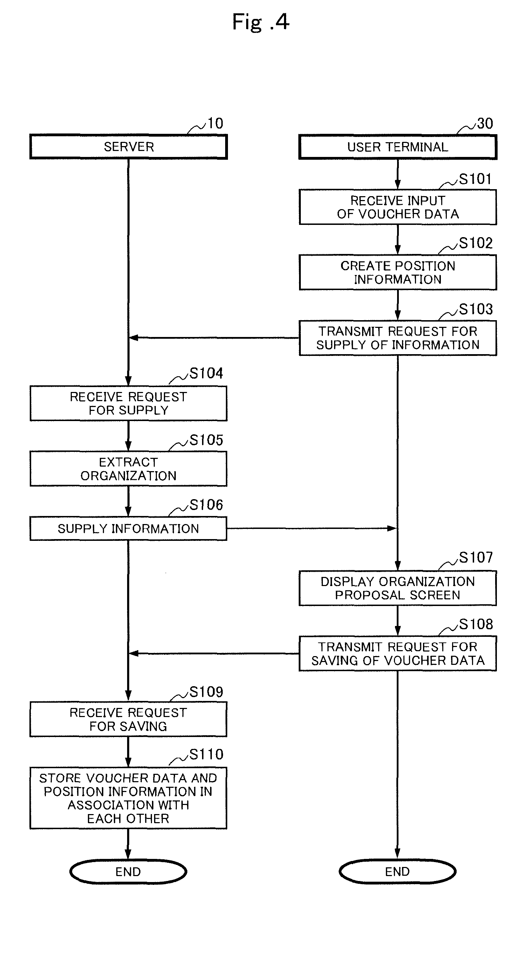

FIG. 4 is a flowchart showing an example of a voucher data storing process executed by the server 10 and others included in the report data management system 100 according to this embodiment. Discussed herein is an example in which the server 10 stores voucher data in accordance with a request from the user terminal 30 used by a user X. The orders of respective processes constituting various types of flows described herein are not limited to the specific orders shown herein as long as no contradiction or the like is produced in the processing contents.

In the voucher data storing process, the user terminal 30 initially receives input of voucher data (step S101). According to this embodiment, the user terminal 30 receives input of voucher data containing data other than an organization (organization as data corresponding to items "factory" and "warehouse" in FIG. 3, for example) in accordance with operation by the user X. The user terminal 30 may be configured to receive, in arbitrary timing, a request for revise of voucher data input by the user X.

After receiving input of voucher data, the user terminal 30 creates position information (step S102). According to this embodiment, the user terminal 30 creates position information indicating the location of the user terminal 30. A known technology is adopted for creating the position information, wherefore the method used herein is not detailed.

After creating the position information, the user terminal 30 transmits to the server 10 a request for supply of information containing the created position information (step S103). The constitution of the request for supply is not limited to a particular constitution, but may be any constitution as long as the constitution contains position information and allows designation of the user terminal 30 and the information requested by the user terminal 30 on the server 10 side.

The server 10 receives the request for supply from the user terminal 30 (step S104). According to this embodiment, the server 10 receives the request for supply, which contains position information indicating the position of the user terminal 30, from the user terminal 30 having completed necessary authentication beforehand.

After receiving the request for supply, the server 10 extracts an organization corresponding to the position information contained in the received request for supply (step S105). According to this embodiment, the server 10 extracts the organization corresponding to the position information by referring to the organization determining master DB 14. The organization corresponding to the position information in this context is not limited to a particular organization, but may be any organization as long as the organization can be designated based on the position information. According to this embodiment, the server 10 extracts an organization uniquely associated with position information in the organization determining master. The method for extracting the organization corresponding to the position information is not limited to this method, but may be arbitrary methods. For example, the server 10 may extracts a plurality of organizations. In this case, the server 10 may be configured to require the user X to select an organization from initially proposed organizations.

After extracting the organization, the server 10 supplies information containing the extracted organization to the user terminal 30 (step S106). According to this embodiment, the server 10 transmits to the user terminal 30 output information containing voucher data which includes an organization (such as data corresponding to the items "factory" and "warehouse" in FIG. 3). The output information in this context refers to information used for outputting various types of data and information in a manner recognizable by the user X on the user terminal 30. The method for supplying information is not limited to transmission of output information to the user terminal 30. More specifically, the constitution of the server 10 for supplying information to the user terminal 30 may be any constitution as long as information can be supplied to the user X as a consequence. Examples of the method for supplying information to the user terminal 30 include supply of information via another computer.

The user terminal 30 displays an output screen in correspondence with information supplied from the server 10 (step S107). According to this embodiment, the user terminal 30 displays a screen (organization proposal screen) for proposing organizations contained in the received output information to the user X on a display screen of a display device (not shown) included in the user terminal 30.

After displaying the output screen, the user terminal 30 transmits a request for saving of voucher data to the server 10 (step S108). Then, the process executed herein ends. According to this embodiment, the user terminal 30 creates a request for saving of data containing voucher data including a selected organization in accordance with reception of selection operation by the user X for selecting the organization, and transmits the created request for saving to the server 10. When the server 10 retains voucher data not containing the organization as data already transmitted thereto, the user terminal 30 may be configured to transmit a request for saving of only data containing the organization to the server 10.

The server 10 receives the request for saving from the user terminal 30 (step S109). According to this embodiment, the server 10 receives the request for saving of voucher data containing the organization (or voucher data associated with the organization).

After receiving the request for saving, the server 10 stores the voucher data and the position information (position information contained in the request for supply received in the process in step S104 according to this embodiment) in the voucher data DB 15 in association with each other based on the received request for saving (step S110). Then, the process executed herein ends.

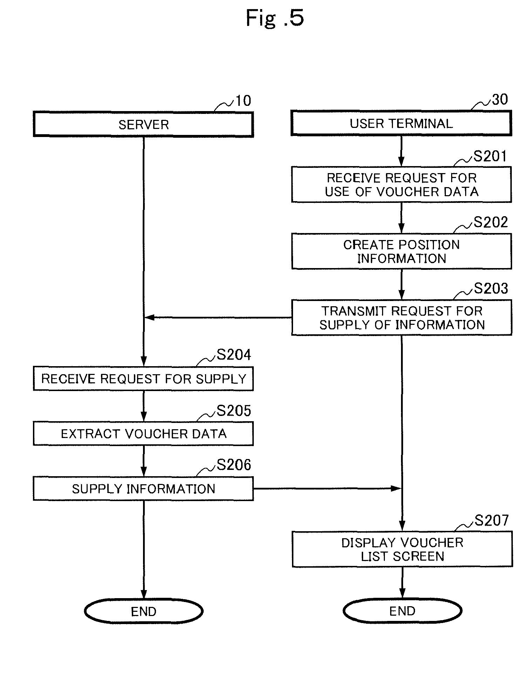

FIG. 5 is a flowchart showing an example of a voucher data supplying process executed by the server 10 and others of the report data management system 100 according to this embodiment. Discussed herein is an example in which the server 10 supplies voucher data in accordance with a request from the user terminal 30 used by the user X.

In the voucher data supplying process, the user terminal 30 initially receives a request for use of voucher data (step S201). According to this embodiment, the user terminal 30 determines that a request for use of voucher data is received based on reception of predetermined operation by the user X. The contents of the request for use of voucher data herein are not particularly limited. Examples of the request for use of voucher data include a request for search of voucher data, and a request for reference of voucher data, for example.

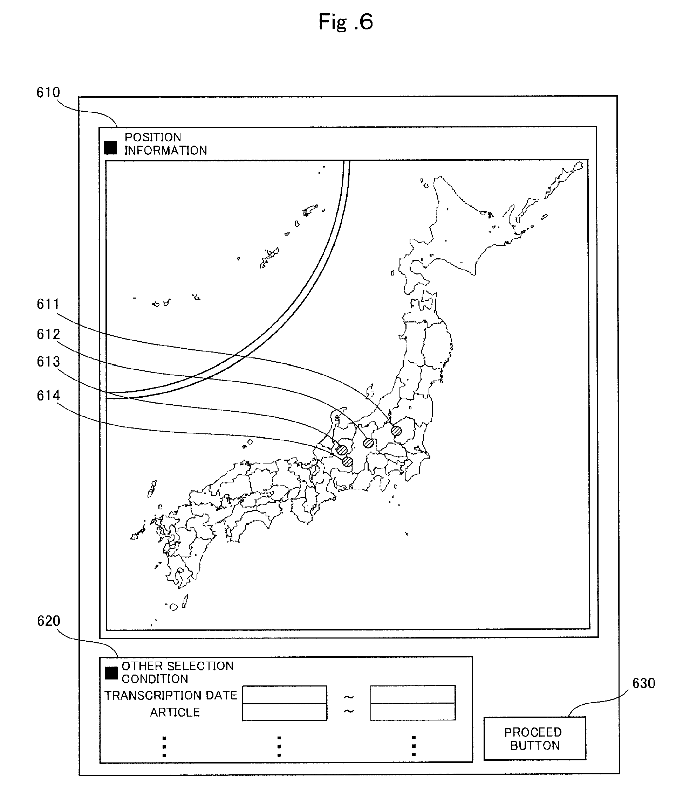

FIG. 6 is a figure illustrating an example of a screen displayed by the user terminal 30 at the time of reception of the request for use. Discussed herein is an example of a screen (condition input screen) displayed when a request for search of voucher data is received as a request for use.

As illustrated in FIG. 6, a position selection receiving area 610, a selection condition receiving area 620, and a proceed button 630 are displayed on the condition input screen.

The position selection receiving area 610 is an area for receiving designation by the user X concerning position information. According to this embodiment, a map is displayed in the selection condition receiving area 620. The contents of the map displayed in the selection condition receiving area 620 are not particularly limited. More specifically, the user terminal 30 may be configured to display a map corresponding to the position of the user terminal 30, or configured to display a map corresponding to information about the user X (such as a map containing the position of the organization to which the user X belongs), for example.

The selection condition receiving area 620 is an area for receiving input of selection conditions from the user X. According to this embodiment, the user terminal 30 receives input of selection conditions corresponding to predetermined items such as transcription dates and articles, based on which input the corresponding selection conditions meeting the selection conditions are selected (or extracted) from the voucher data DB 15.

The proceed button 630 is a virtual button for receiving a request for execution of extraction of voucher data corresponding to the input selection conditions.

After receiving the request for use of voucher data, the user terminal 30 creates position information (step S202). According to this embodiment, the user terminal 30 creates position information corresponding to a plurality of positions 611 through 614 when the user X selects the plurality of positions 611 through 614 on the map displayed in the position selection receiving area 610, for example. In this case, the user terminal 30 displays the points selected by the user X in such a manner as to make distinctions between these points.

After creating the position information, the user terminal 30 transmits a request for supply of information containing the created position information (step S203). According to this embodiment, the user terminal 30 transmits to the server 10 a request for supply of information containing the created position information and the input selection conditions in accordance with selection of the proceed button 630 by the user X.

The server 10 receives the request for supply from the user terminal 30 (step S204). According to this embodiment, the server 10 receives the request for supply containing the position information and the selection conditions from the user terminal 30 having completed necessary authentication beforehand.

After receiving the request for supply, the server 10 extracts voucher data corresponding to the position information contained in the received request for supply from the voucher data DB 15 (step S205). According to this embodiment, the server 10 extracts from the voucher data DB 15 voucher data which is included in the voucher data containing the position information included in the received request for supply, and meets the selection conditions contained in the request for supply.

After extracting the voucher data, the server 10 supplies information containing the extracted voucher data to the user terminal 30 (step S206). Then, the process executed herein ends. According to this embodiment, the server 10 transmits output information containing the extracted voucher data to the user terminal 30.

The user terminal 30 displays an output screen corresponding to the information supplied from the server 10 (step S207). According to this embodiment, the user terminal 30 displays, on the display screen of the display device included in the user terminal 30, a screen (voucher list screen) for allowing the user X to recognize the voucher data contained in the received output information.

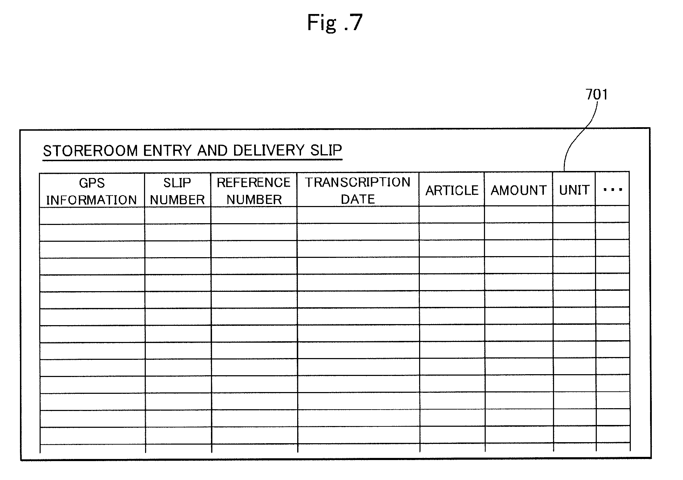

FIG. 7 is a figure illustrating an example of the voucher list screen. As illustrated in FIG. 7, a list of various types of information associated with GPS information as an example of position information is displayed on the voucher list screen. Description of specific contents of respective information is not shown in FIG. 7.

As discussed herein, a report data management server (such as the server 10) according to the foregoing embodiment is a server for operation of ERP, and provides report data (such as a part of voucher data) produced for each business in a business process to the user X via a communication network in accordance with a request issued from the user terminal 30 used by the user X. The report data management server includes: a report data storing unit (such as the voucher data DB 15) storing position information (such as GPS information) and report data in association with each other. The report data management server receives a request for supply of information containing position information from the user terminal 30 (such as steps S104 and S204), extracts information corresponding to position information contained in the request for supply from the report data storing unit in accordance with reception of the request for supply (such as steps S105 and S205), and supplies extracted information to the user terminal 30 (such as steps S106 and S206). Accordingly, the user can more easily handle various types of information in a business system (ERP system) providing information about reports.

More specifically, proposal of organizations corresponding to the user, and search of vouchers required by the user are achieved based on position information of the user. Accordingly, the user is allowed to more easily handle information in a business system provided according to this embodiment.

According to the foregoing embodiment, the report data storing unit (such as voucher data DB 15) stores information concerning organizations in association with the position information and the report data (such as voucher data containing GPS information). The server 10 extracts an organization corresponding to the position information (such as step S105), and supplies information containing the organization to the user terminal 30 (such as step S106). Accordingly, proposal of an organization is allowed based on the position information about the user.

According to the foregoing embodiment, the server 10 receives a request for supply created in accordance with input operation for inputting report data on the user terminal side (such as step S104). Accordingly, proposal of an organization is allowed based on position information at the time of voucher input.

According to the foregoing embodiment, the server 10 receives a request for saving of report data (such as voucher data) from the user terminal 30 (such as step S109), and stores in the report data storing unit (such as voucher data DB 15) report data corresponding to the request for saving and the position information in association with each other in accordance with reception of the request for saving (such as step S110). Accordingly, storage of the voucher data and the position information is allowed in conjunction with each other at the time of voucher saving.

According to the foregoing embodiment, the server 10 receives a request for supply created on the user terminal 30 side in accordance with a request for use (such as request for use of voucher data received by the user terminal 30) (such as step S204). Accordingly, search of an organization based on the position information is allowed at the time of voucher use.

According to the foregoing embodiment, the request for use received by the user terminal 30 contains a request concerning search or reference of report data. Accordingly, search of an organization based on the position information is allowed at the time of search or reference of voucher.

According to the foregoing embodiment, the server 10 extracts report data corresponding to the position information (such as step S205), and supplies information containing the report data to the user terminal (such as step S206). Accordingly, search of an organization based on the position information is allowed at the time of search or reference of voucher.

According to the foregoing embodiment, the server 10 extracts report data corresponding to the position information when a received request is a request for supply created on the user terminal 30 side in accordance with the request for use (such as step S205), and supplies information containing the report data to the user terminal 30 (such as step S206). Accordingly, search of an organization based on the position information is allowed at the time of search or reference of voucher.

While not particularly touched upon in the foregoing embodiment, it is preferable that the constitution of the user terminal 30 for receiving selection of a position from the user X is a constitution operable intuitively by the user. Examples of the constitution for receiving selection of a position from the user include a constitution which allows the user terminal 30 to create position information based on a reduced scale of a map to be displayed, and a position of contact of the user's finger (such as a position of reception of tap operation). Another possible constitution is a constitution which allows the user terminal 30 to create position information in accordance with slide operation (such as area designation on a screen by slide operation) received from the user.

According to the embodiment discussed herein, the user terminal 30 creates position information in accordance with input of voucher data, and transmits to the server 10 a request for supply of information containing the created position information. However, the timing in which the user terminal 30 creates position information is not limited to the foregoing timing. It is preferable that position information is created in the timing suited for the circumstances of the user. More specifically, the user terminal 30 may regularly create position information independent of the presence or absence of input of voucher data, for example. In this case, the user terminal 30 may transmit position information to the server 10 in accordance with reception of predetermined operation, display information received from the server 10, and receive input of voucher data from the user X. This structure allows the user to enter the remaining input after the initial proposal of organizations is given.

While not particularly described in the foregoing embodiment, the server 10 executes the foregoing respective processes (see FIGS. 4 and 5) under a processing program (report data management program) stored in a memory medium included in the server 10. In addition, the user terminal 30 executes the foregoing respective processes (see FIGS. 4 and 5) under a processing program (report data management program) stored in a memory medium included in the user terminal 30.

The constitution of the report data management system 100 is not limited to the foregoing constitution. A part or all of the functions included in one of the user terminal 30 and the server 10 of the report data management system 100 may be included in the other of the user terminal 30 and the server 10. More specifically, a part or all of the processes described as processes executed by the user terminal 30 may be executed by the server 10, or a part or all of the processes executed by the server 10 may be executed by any of the plurality of user terminals 30 through 3N. In addition, a part or all of the information stored in a memory unit included in the server 10 may be included in any of the plurality of user terminals.

The present invention offers an advantageous effect of allowing a user to more easily handle various types of information in a business system (ERP system) providing information on reports.

## Claims

1. A report data management server which is a server for operation of ERP, and provides report data produced for each business in a business process to a user via a communication network in accordance with a request issued from a user terminal used by the user, comprising:
a report data storing unit storing position information and report data in association with each other;
a supply request receiving unit receiving a request for supply of information containing position information from the user terminal;
an extracting unit extracting information corresponding to position information contained in the request for supply from the report data storing unit in accordance with reception of the request for supply by the supply request receiving unit; and
a supplying unit supplying information extracted by the extracting unit to the user terminal.

2. The report data management server according to claim 1, wherein
the report data storing unit stores information concerning organizations in association with the position information and the report data,
the extracting unit extracts an organization corresponding to the position information, and
the supplying unit supplies information containing the organization to the user terminal.

3. The report data management server according to claim 2, wherein the supply request receiving unit receives a request for supply created in accordance with input operation for inputting report data on the user terminal side.

4. The report data management server according to claim 2, further comprising:
a saving request receiving unit receiving a request for saving of report data; and
a storing unit storing in the report data storing unit report data corresponding to the request for saving and the position information in association with each other in accordance with reception of the request for saving by the saving request receiving unit.

5. The report data management server according claims 2, wherein the supply request receiving unit receives a request for supply created on the user terminal side in accordance with a request for use of report data.

6. The report data management server according to claim 5, wherein the request for use contains a request concerning search or reference of report data.

7. The report data management server according to claims 1, wherein
the extracting unit extracts report data corresponding to the position information, and
the supplying unit supplies information containing the report data to the user terminal.

8. The report data management server according to claim 5, wherein
the extracting unit extracts report data corresponding to the position information when a request for supply received by the supply request receiving unit is a request for supply created in accordance with the request for use, and
the supplying unit supplies information containing the report data to the user terminal.

9. A report data management program allowing operation of ERP, and allowing a report data management server to execute a process for supplying report data produced for each business in a business process to a user via a communication network in accordance with a request issued from a user terminal used by the user, under which program the report data management server including a report data storing unit storing position information and report data in association with each other executes
a supply request receiving process receiving a request for supply of information containing position information from the user terminal,
an extracting process extracting information corresponding to position information contained in the request for supply from the report data storing unit in accordance with reception of the request for supply in the supply request receiving process, and
a supplying process supplying information extracted in the extracting process to the user terminal.
